# EUROPEAN PATENT APPLICATION

(11) **EP 1 940 169 A1**
(43) Date of publication of application: **02.07.2008**
(21) Application number: 07122949.6
(22) Date of filing: 11.12.2007
(51) Int. Cl.: H04N 7/173, H04N 7/24, G06Q 30/00, H04L 29/06

(54) **A method and system for inserting advertising data into content**

(30) Priority: 22.12.2006 US 645101
(71) Applicant: AT&T Knowledge Ventures, L.P., Reno, NV 10013-2412 (US)
(72) Inventor: Walter, Edward A., Boerne Texas 78006 (US); Kenyon, Erin, 304 Piedmont California 94611 (US); Wollmershauser, Steven M., San Antonio texas 78258 (US)
(74) Representative: Harding, Richard Patrick

(57) **Abstract**

A method is disclosed for data communication in an internet protocol television (IPTV) system. The method includes receiving at a first end user device remote advertising data associated with a remote zone and home content data, wherein the home content data is not available in the remote zone and merging the remote advertising data and the home video data at the first end user device. A system is disclosed for performing the method.

## Description

### FIELD OF THE DISCLOSURE

The present disclosure relates to the field of advertising on a television system.

### BACKGROUND

Targeted advertising selects an advertisement and sends the advertisement to selected individuals who are targeted to receive the advertisement. Advertisers can potentially save advertising dollars by selecting who will receive their advertisements rather than indiscriminately broadcasting their advertisements to a general population of recipients. Thus, only those individuals selected by an advertiser receive the targeted advertisement in hope that the targeted recipients will be more responsive on a per capita basis than a general broadcast population. Advertisement distributors and providers that enable such an advertising model (e.g., Internet portals, television providers, and access network providers) can correspondingly increase their revenue per advertisement impression by providing targeted advertising options for advertisers.

Targeted advertisements have historically been sent to targeted recipients so that advertisers reach only those advertising recipients who are deemed by the advertiser as most likely to be responsive to their advertisements. Targeted advertisements have been directed to selected demographic sectors of the population so that the targeted advertisement is sent only to those members of a selected demographic sector who are deemed by advertisers to be most likely to be responsive to their advertisements.

### BRIEF DESCRIPTION OF THE DRAWINGS

**FIG. 1** depicts an illustrative embodiment of a system delivering home advertising data and content;

**FIG. 2** depicts another illustrative embodiment of a system to offer remote advertising data relevant to a user's remote geographic location while receiving redirected video content data from their "Home" location;

**FIG. 3** depicts another illustrative embodiment of a system to offer remote advertising that is relevant to a user's remote geographic location where receiving redirected video content data from their "Home" location;

**FIG. 4** depicts a flow chart of functions performed in another illustrative embodiment of a system to provide redirected home video data and remote advertising data;

**FIG. 5** is a schematic diagram of a data structure for storing data in an illustrative embodiment; and

**FIG. 6** is an illustrative embodiment of a machine for performing functions disclosed.

### SUMMARY OF THE DISCLOSURE

In a particular illustrative embodiment a method for data communication in an internet protocol television (IPTV) system is disclosed. The method includes receiving at a first end user device remote advertising data associated with a remote zone and home content data, wherein the home content data is not available in the remote zone and merging the remote advertising data and the home video data at the first end user device. In another particular illustrative embodiment the method further includes sending the merged remote advertising data and home advertising data to a second end user device, wherein the first end user device is in the home zone and the second end user device is in the remote zone. In another particular illustrative embodiment the first end user device is in the remote zone. In another particular illustrative embodiment the home video data is received from a second end user device in the home zone and the remote advertising data is received from a communication network. In another particular illustrative embodiment the method further includes receiving data determining a remote zone geographic location from an IPTV router monitoring IP packets flow at the IPTV network router in the remote zone. In another particular illustrative embodiment the method further includes receiving data at the first end user device, wherein the data identifies an advertiser coupon from a remote advertiser in the remote zone that is equivalent to a home advertiser coupon in the home zone. In another particular illustrative embodiment the home advertising data includes contact data enabling the remote end user device to seamlessly connect to an advertiser in the remote zone associated with an advertiser in the home zone.

In a particular illustrative embodiment a system for data communication in an internet protocol television (IPTV) system is disclosed. The system includes a computer coupled to a memory and a computer program in the memory. The computer program includes instructions to receive at a first end user device remote advertising data associated with a remote zone and home content data, wherein home content data is not available in the remote zone and instructions to merge the remote advertising data and the home video data at the first end user device. In another particular illustrative embodiment the computer program further includes instructions to send the merged remote advertising data and home advertising data to a second end user device, wherein the first end user device is in the home zone and the second end user device is in the remote zone. In another particular illustrative embodiment the first end user device is in the remote zone. In another particular illustrative embodiment the home video data is received from a second end user device in the home zone and the remote advertising data is received from a communication network. In another particular illustrative embodiment the computer program further includes instructions to receive data determining a remote zone geographic location from an IPTV router monitoring IP packets flow at the IPTV network router in the remote zone. In another particular illustrative embodiment the computer program further includes instructions to receive data at the first end user device, wherein the data identifies an advertiser coupon from a remote advertiser in the remote zone that is equivalent to a home advertiser coupon in the home zone. In another particular illustrative embodiment the home advertising data includes contact data enabling the remote end user device to seamlessly connect to an advertiser in the remote zone associated with an advertiser in the home zone.

In a particular illustrative embodiment a computer readable medium containing a computer program for data communication in an internet protocol television (IPTV) system is disclosed. The computer program includes instructions to receive at a first end user device remote advertising data associated with a remote zone and home content data, wherein home content data is not available in the remote zone and instructions to merge the remote advertising data and the home video data at the first end user device. In another particular illustrative embodiment the computer program further includes instructions to send the merged remote advertising data and home advertising data to a second end user device, wherein the first end user device is in the home zone and the second end user device is in the remote zone. In another particular illustrative embodiment the first end user device is in the remote zone. In another particular illustrative embodiment the home video data is received from a second end user device in the home zone and the remote advertising data is received from a communication network. In another particular illustrative embodiment the computer program further includes instructions to receive data determining a remote zone geographic location from an IPTV router monitoring IP packets flow at the IPTV network router in the remote zone. In another particular illustrative embodiment the computer program further includes instructions to receive data at the first end user device, wherein the data identifies an advertiser coupon from a remote advertiser in the remote zone that is equivalent to a home advertiser coupon in the home zone. In another particular illustrative embodiment the home advertising data includes contact data enabling the remote end user device to seamlessly connect to an advertiser in the remote zone associated with an advertiser in the home zone.

In a particular illustrative embodiment a system for receiving advertising data in an internet protocol television (IPTV) system is disclosed. The system includes a processor coupled to memory and a computer program in the memory comprising instructions to receive remote advertising data associated with a remote zone and home content data associated with a home zone at a remote end user device in a remote zone outside of the home zone wherein the home content data is not available in the remote zone. In another particular illustrative embodiment the computer program further includes instructions to receive at the remote end user device, the remote advertising data inserted into the home content data. In another particular illustrative embodiment the computer program further includes instructions to merge the remote advertising data into the home video data at the remote end user device.

In a particular illustrative embodiment a data structure in memory is disclosed. The data structure includes a home and remote client device IP address field for containing data indicating a client device IP address, a home zone field for containing data indicating an advertising server for a home zone associated with the client device, and a remote zone field for containing data indicating an advertising server for a remote zone associated with the client device. In another particular illustrative embodiment the data structure further includes a coupon field for storing data indicating coupons and location data indicating locations to which an equivalent remote coupon can be provided to the client device in the remote zone. In another particular illustrative embodiment the data structure further includes a zone server field for storing IPTV server identification data for each remote zone and each home zone indicating an IPTV system server identity associated with each remote zone and each home zone.

### DETAILED DESCRIPTION

Currently, television users can install a redirector application or device, such as a Sling box^{™} by Sling Media, along with a television receiver and view home video data at a remote location. The redirector device sends the home video data via an IP connection to a remote end user device where a user can watch home content data and embedded home advertising, sent to them from a home source. An illustrative embodiment provides a remote advertiser the ability to advertise services and goods to a remote user in a remote location with a chance of the remote user actually having an opportunity to use the advertised services while away from home at the remote location. An internet protocol television (IPTV) user with a redirector device or application can redirect all video and content data from their home location (home) while in another remote city away from their home location. Content may include all digital data including but not limited to video, audio, text, graphics, and any other digital data. Advertising data based upon a geographic locality of user's home may have very little value in the remote location since the home advertising retailers may be local to the home location and may not be readily available in the remote location.

This disclosure describes an illustrative embodiment for redirection of home video and content data of geographic based remote advertising data based upon the general remote geographic location of an end user client device. The remote location is determined on a communication network such as an internet protocol (IP) network or an IPTV system. In an illustrative embodiment, a method of geographic location determination is provided to identify an end user device location of a redirector IPTV service, calculate general geographic proximity of the user by IP packet flows through a last communication network provider edge (PE) router, such as an IPTV PE router, and provide this information back to the communication network service provider or IPTV service provider in the form of a metro service area (MSA) code. The MSA indicates a general geographic location for the user. The communication network service provider determines the general remote MSA in which the traveling user is currently available and sends remote advertising data associated with the remote MSA to an end user client device such as a home Set Top Box (STB) from which a redirector IP data stream is coming.

A home or remote end user device can be any digital device including but not limited to a personal computer, personal digital assistant, cell phone or other IP enabled device. The local STB merges the local content with the remote advertising data feed (for example, via a standard cue tone), and has the redirector application at the STB send out this merged video and advertising data stream to the redirector user at the remote location. A particular illustrative method substantially reduces data transfer over head requirements at the receiving remote end user device, e.g., personal computer (PC) application for the redirector service.

In another illustrative embodiment the remote user's remote location is determined by the IPTV PE router. Once the user's remote geographic location is determined, a remote advertising data stream is fed from an Internet source 123 or through the internet from a source such as an IPTV server or an end user device, to the redirector application for splicing at the redirector PC/Application on an end user device at the user's remote location. In this particular illustrative embodiment, the remote PC/Application ignores incoming home advertising data and inserts the remote advertising data for the remote location provided across an IP connection over the internet. This second illustrative embodiment reduces a large amount of advertising IP traffic from crossing the IP backbone (e.g., Internet) but would create different behavior as to delivery of video and advertising data to the remote red irector PC/Application at the remote end user device. In addition, firewall/VPN tunnel issues are resolved in another particular illustrative embodiment.

A redirector application or device redirects all content and advertising data from a home source at an end user's home to an end user's remote location. The redirector device or application can be installed between the cable or satellite box to redirect the home video data stream and home or remote advertising data across an IP network to an application residing on a laptop or PC at a remote location. The illustrative embodiment is especially useful for a user who often travels to remote locations away from a home location. The redirector application enables home video data to be streamed to a remote end user device at a remote location. Home advertising from a home market is often of no value since the user is at a remote location often cannot avail themselves of products and services from their home market.

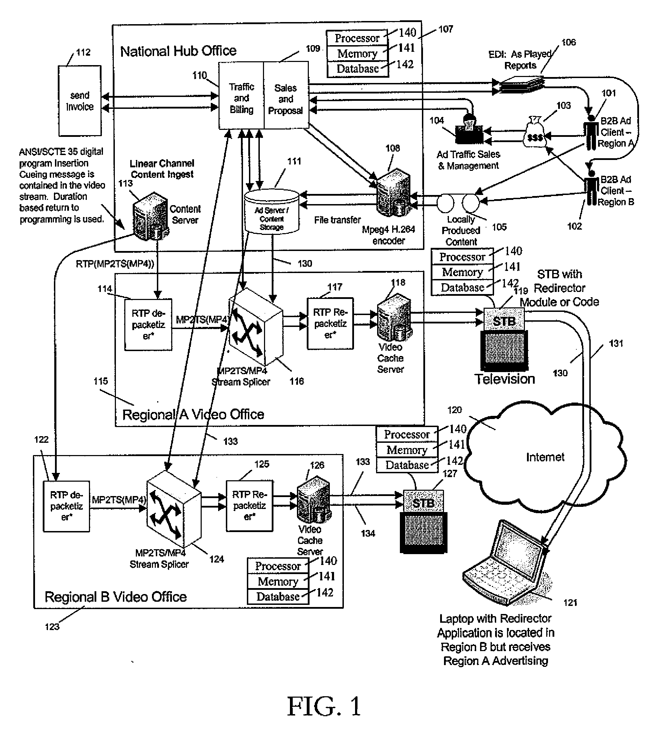

**FIG. 1** illustrates the advertising architecture and delivery of developed advertising across an IPTV network. As shown in **FIG. 1**, multiple business to business (B2B) advertising clients **101, 102** work with the IPTV advertising client **104** to introduce their B2B advertising **105** as locally produced home content. Advertising client **101** represents an advertising client for Region A advertising data and advertising client **102** represents an advertising client for Region B advertising data. Both advertising client's follow similar paths through the backend sales **109,** traffic and billing systems **110.** In addition, invoices **112** and the "As Played Report" **106** are generated for both advertising clients **101, 102.**

A file transfer from the moving picture expert group (Mpeg) H.264 encoder **108** to the advertising server/content storage system **111** positions the advertising content for distribution to Region A **115** and Region B **123.** Local advertising content destined for Region A is passed from the advertising server/content storage **111** to the MP2TS/MP4 stream splicer **116.** The stream is then sent through a RTP re-packetizer **117,** through the video cache server **118,** to a customer's Set Top Box (STB) **119** in Region A. If a customer is using a redirector product then the stream is forwarded from STB **119** via an IP connection across the Internet **120** to an IP address associated with a PC **121** on which a redirector application is running. As shown, home advertising data **130** from Region A along with the home content data **131** from Region A is forwarded to remote user in Region B.

For advertising data **130** destined for Region B the advertising server/content storage within the national head-end office **107** is forwarded to the MP2TS/MP4 stream splicer **124** at the Regional B video head-end office **123.** From there, the video **130**/advertising **133** data stream is re-packetized at the RTP re-packetizer **125** and sent to the video cache server **125** for deployment to a Region B end user device such as STB **127.** Each server, router, STB and end user device in **FIGS. 1-3** contains a processor **140,** memory **141** and data base **142** in computer readable medium **142.**

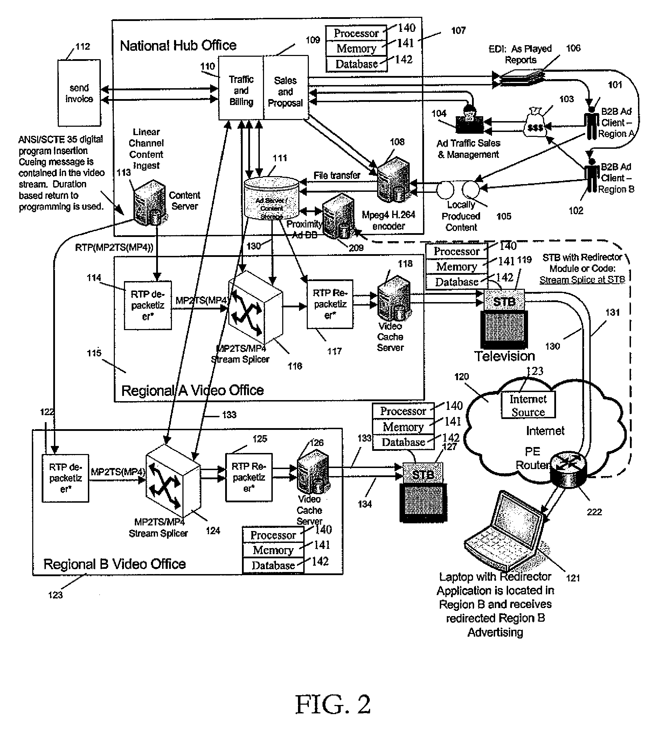

**FIG. 2** illustrates the ability of an IPTV service provider to direct remote advertising data and home content data to all STBs or redirector type devices, even when away from their "Home" location at a remote location. As shown in **FIG. 1****,** the B2B clients **101, 102,** traffic, billing, and sales **109, 110,** invoicing **112,** and Mpeg encoding **108** do not change. An "As Played Report" **106** has an option to display where their advertising was redirected to a remote user. A proximity advertising database **209** can be used to maintain all provider edge (PE) router **222** IP addresses, associated regional codes (MSAs), and physical remote location for remote end user client devices.

A user with a redirector service or device offered by an IPTV service provider in an illustrative embodiment would be remote **121** from the home location **119.** Access would be across the Internet **120** via the identified PE router **222.** When the home STB **119** identified that it was in redirect mode the home STB would capture the location IP address of the remote user and forward remote user's IP address to the proximity advertising database **209.** The illustrative embodiment would determine that the user was in Region B and would notify the advertising server of the appropriate advertising data (from Region B) to send to the home STB **119.** The home STB in redirect mode would forward this remote advertising data and home video data to the remote user **121.** The advertising data would either be spliced at the stream splicer **116** in the network or at the STB 119 before sending data to the remote PC **121** or spliced at the remote end user device.

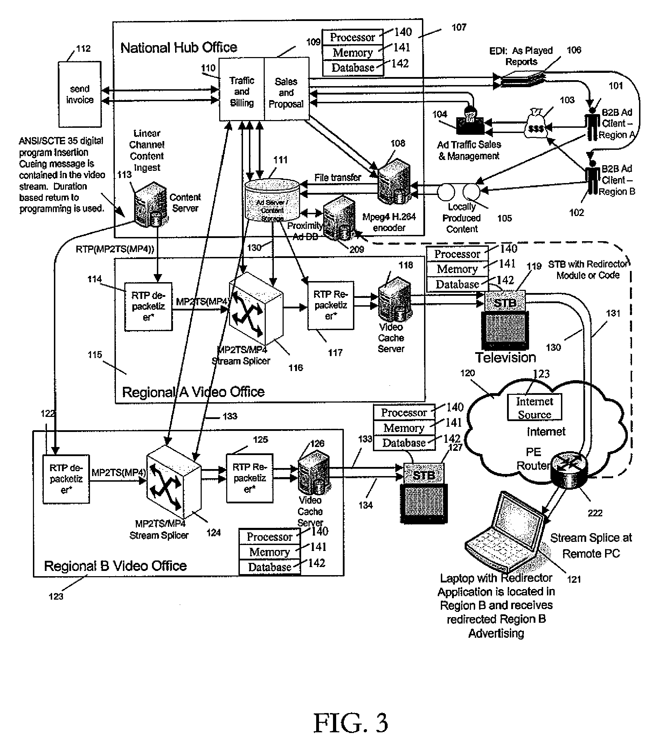

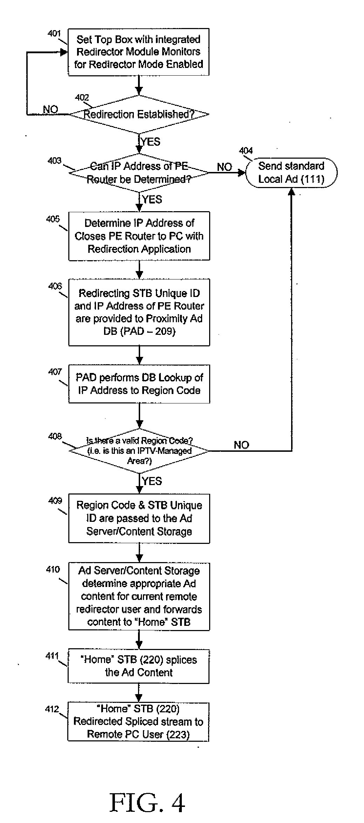

Turning now to **FIG. 3, FIG. 3** illustrates a similar embodiment as shown in **FIG. 2****,** however, the home video and remote advertising data are spliced or merged at the remote end user client device. Turning now to **FIG. 4, FIG. 4** depicts a flow chart of an illustrative embodiment of functions performed to determine proximity of a remote user to an IPTV region when the remote user is away from home at a remote location and to provide the appropriate remote advertising content to a user's remote location. The first step in a particular illustrative embodiment is for the home STB or IPTV server application to determine if the home end user device is in redirect mode and that a remote client is asking for redirected content in block **301.**

In an illustrative embodiment the method determines if the IP address of the PE router can be determined at block **302.** If the IP address cannot be determined the standard home advertising data set is spliced and redirected to the end user device. If the IP address for the remote end user client device can be determined from the PE router then the IP address and STB unique identifier are sent to the advertising server **210** for processing at block **306.** The proximity advertising database (PAD) performs a lookup of the region code based upon the PE IP address at block **307.**

If a valid IP region code is not found the standard home advertisement will be sent at block **304.** If a valid code is found, the region code and STB unique ID are passed to the advertising server/content storage **210** for correlation to the appropriate advertising data at block **310.** This advertising data is then passed to the stream splicer **217** or left un-spliced for the STB **220** to perform the splicing at block **311.** Once the spliced advertising data is available at the STB it is redirected to the remote PC **223** with the appropriate redirector software **312.**

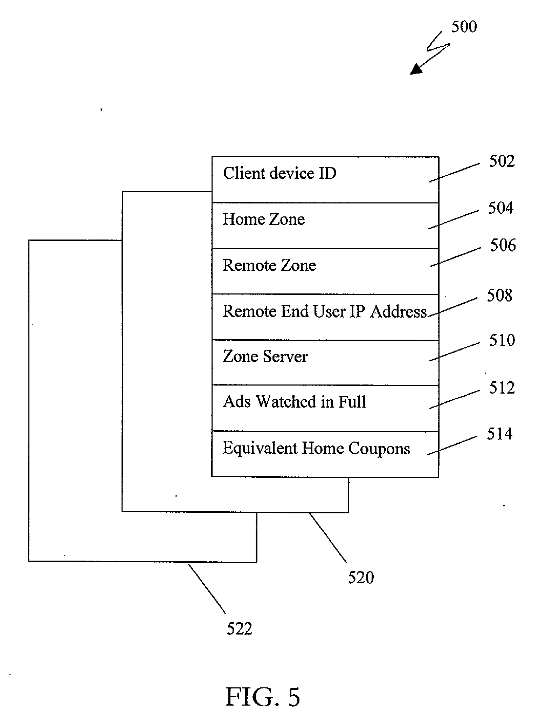

Turning now to **FIG. 5** a data structure as utilized in another particular illustrative embodiment is depicted. As shown in **FIG. 5** the data structure **500** contains a client end user device ID field **502,** a home zone field **504,** a travel zone field **506,** remote end user device IP address field **508,** a zone server field **510,** ads watched in full field **512** and equivalent home coupons field **514.** Multiple data structures for multiple different client devices **520** and **522** may also be stored in memory for correlating between or matching client ID having the same home zone and the same travel zone for delivering content to the client devices identified by the client ID while traveling. The client ID field contains data indicating an end user client device identity. The remote end user device IP address field contains data indicative of an IP address for the end user client device in the remote location. The home zone field contains data indicating an advertising server for a home zone associated with the client device. The remote zone field contains data indicating a remote zone advertising server associated with the client device remote location.

Different levels of advertising can be sent. A credit toward the purchase of IPTV service is adjusted for advertisements watched by a user at a client device. The more advertisements a client device receives and watches in full, the more credit it receives toward pay for IPTV service. An advertisement is deemed watched in full when a client device receives the advertisement inserted into content without switching to another IP address during reception of the advertisement. The switching/not switching during advertisements is monitored by the client device or the travel server and stored in the data structure. The advertisements received field stores data indicating which advertisements the client device has received in full without switching from the advertisement for creating statistics to send to a home server associated with the home zone.

The equivalent coupon field contains data indicating remote coupons and location data indicating locations to which a remote coupon from an advertiser in the remote zone can be provided to the client device in the remote zone which is equivalent to a home coupon from the home zone. The zone server field stores IPTV server identification data for each travel zone and each home zone indicating an IPTV system server identity associated with each travel zone and each home zone. The home zone and travel zone fields store data allowing each travel zone and each home zone to be customized for example, including but not limited to, population density, demographic area, zip code, density, and geographical areas of interest.

In an illustrative embodiment remote coupons that are equivalent to home coupons can be sent to a client device while traveling in a remote zone. Home advertisers can make associations with similar or equivalent remote advertisers in a remote zone. A remote zone advertiser can send a coupon that's redeemable at an equivalent advertiser in the remote zone. Thus a coupon for an advertiser in a home zone who has a similar store in the remote zone may send a coupon to the client device in the remote zone that is good at the home advertiser's store in the remote zone. In another particular illustrative embodiment when a home advertiser does not have a store in the remote zone the home advertiser may identify equivalent remote advertisers offering a similar product or service in the remote zone and provide a remote coupon for that equivalent product or service in the remote zone to the end user client device in the remote zone. Home zone advertisers and equivalent travel zone advertisers can exchange referral credits or fees for equivalent coupons sent by remote advertisers to remote client devices and used at equivalent advertisers in a remote zone.

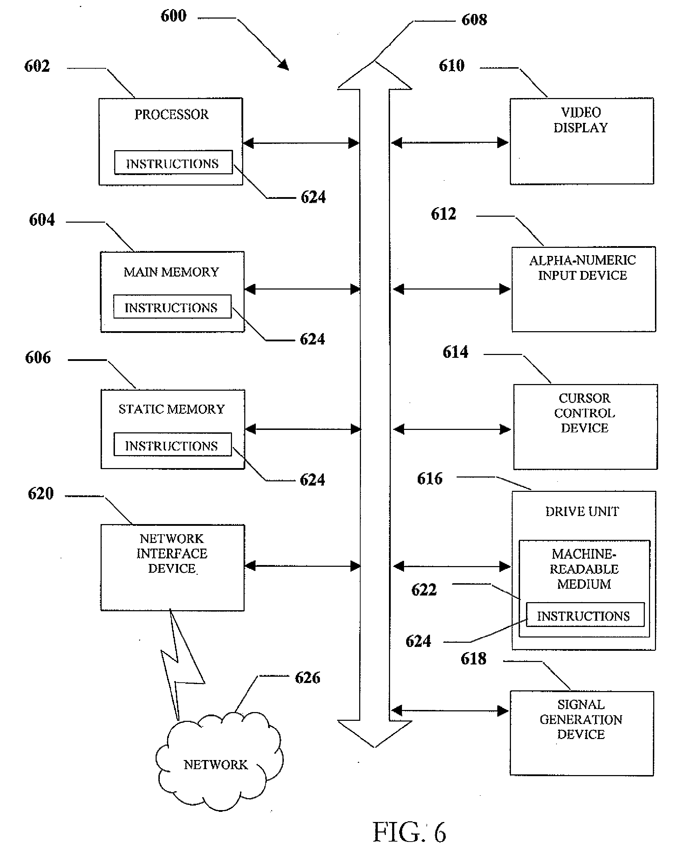

**FIG. 6** is a diagrammatic representation of a machine in the form of a computer system **600** within which a set of instructions, when executed, may cause the machine to perform any one or more of the methodologies discussed herein. In some embodiments, the machine operates as a standalone device. In some embodiments, the machine may be connected (e.g., using a network) to other machines. In a networked deployment, the machine may operate in the capacity of a server or a client user machine in server-client user network environment, or as a peer machine in a peer-to-peer (or distributed) network environment. The machine may comprise a server computer, a client user computer, a personal computer (PC), a tablet PC, a set-top box (STB), a Personal Digital Assistant (PDA), a cellular telephone, a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any machine capable of executing a set of instructions (sequential or otherwise) that specify actions to be taken by that machine. It will be understood that a device of the present invention includes broadly any electronic device that provides voice, video or data communication. Further, while a single machine is illustrated, the term "machine" shall also be taken to include any collection of machines that individually or jointly execute a set (or multiple sets) of instructions to perform any one or more of the methodologies discussed herein.

The computer system **600** may include a processor **602** (e.g., a central processing unit (CPU), a graphics processing unit (GPU), or both), a main memory **604** and a static memory **606,** which communicate with each other via a bus **608.** The computer system **600** may further include a video display unit **610** (e.g., liquid crystals display (LCD), a flat panel, a solid state display, or a cathode ray tube (CRT)). The computer system **600** may include an input device **612** (e.g., a keyboard), a cursor control device **614** (e.g., a mouse), a disk drive unit **616,** a signal generation device **618** (e.g., a speaker or remote control) and a network interface 9.

The disk drive unit **616** may include a machine-readable medium **622** on which is stored one or more sets of instructions (e.g., software **624)** embodying any one or more of the methodologies or functions described herein, including those methods illustrated in herein above. The instructions **624** may also reside, completely or at least partially, within the main memory **604,** the static memory **606,** and/orwithin the processor **602** during execution thereof by the computer system **600.** The main memory **604** and the processor **602** also may constitute machine-readable media. Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present invention, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

The present invention contemplates a machine readable medium containing instructions **624,** orthat which receives and executes instructions 624 from a propagated signal so that a device connected to a network environment **626** can send or receive voice, video or data, and to communicate over the network **626** using the instructions **624.** The instructions **624** may further be transmitted or received over a network **626** via the network interface device **620.**

While the machine-readable medium **622** is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention. The term "machine-readable medium" shall accordingly be taken to include, but not be limited to: solid-state memories such as a memory card or other package that houses one or more read-only (non-volatile) memories, random access memories, or other re-writable (volatile) memories; magneto-optical or optical medium such as a disk or tape; and carrier wave signals such as a signal embodying computer instructions in a transmission medium; and/or a digital file attachment to e-mail or other self-contained information archive or set of archives is considered a distribution medium equivalent to a tangible storage medium. Accordingly, the invention is considered to include any one or more of a machine-readable medium or a distribution medium, as listed herein and including art-recognized equivalents and successor media, in which the software implementations herein are stored.

Although the present specification describes components and functions implemented in the embodiments with reference to particular standards and protocols, the invention is not limited to such standards and protocols. Each of the standards for Internet and other packet switched network transmission (e.g., TCP/IP, UDP/IP, HTML, and HTTP) represent examples of the state of the art. Such standards are periodically superseded by faster or more efficient equivalents having essentially the same functions. Accordingly, replacement standards and protocols having the same functions are considered equivalents.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived there from, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

The Abstract of the Disclosure is provided to comply with 37 C.F.R. §1.72(b), requiring an abstract that will allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A method for data communication in an internet protocol television (IPTV) system, the method comprising:
receiving at a first end user device remote advertising data associated with a remote zone and home content data, wherein the home content data is not available in the remote zone; and
merging the remote advertising data and the home video data at the first end user device.

2. The method of claim 1, further comprising:
sending the merged remote advertising data and home advertising data to a second end user device, wherein the first end user device is in the home zone and the second end user device is in the remote zone.

3. The method of claim 1, wherein the first end user device is in the remote zone.

4. The method of claim 3, wherein the home video data is received from a second end user device in the home zone and the remote advertising data is received from a communication network.

5. The method of any preceding claim, the method further comprising:
receiving data determining a remote zone geographic location from an IPTV router monitoring IP packets flow at the IPTV network router in the remote zone.

6. The method of any preceding claim, further comprising:
receiving data at the first end user device, wherein the data identifies an advertiser coupon from a remote advertiser in the remote zone that is equivalent to a home advertiser coupon in the home zone.

7. The method according to any preceding claim, wherein the home advertising data includes contact data enabling the remote end user device to seamlessly connect to an advertiser in the remote zone associated with an advertiser in the home zone.

8. A system for data communication in an internet protocol television (IPTV) system, the system comprising:
a computer coupled to a memory;
a computer program in the memory, the computer program comprising instructions to receive at a first end user device remote advertising data associated with a remote zone and home content data, wherein home content data is not available in the remote zone and instructions to merge the remote advertising data and the home video data at the first end user device.

9. The system of claim 8, the computer program further comprising:
instructions to send the merged remote advertising data and home advertising data to a second end user device, wherein the first end user device is in the home zone and the second end user device is in the remote zone.

10. The system of claim 8, wherein the first end user device is in the remote zone.

11. The system of claim 10, wherein the home video data is received from a second end user device in the home zone and the remote advertising data is received from a communication network.

12. The system of any one of claims 8 to 11, the computer program further comprising:
instructions to receive data determining a remote zone geographic location from an IPTV router monitoring IP packets flow at the IPTV network router in the remote zone.

13. The system of any one of claims 8 to 12, the computer program further comprising:
instructions to receive data at the first end user device, wherein the data identifies an advertiser coupon from a remote advertiser in the remote zone that is equivalent to a home advertiser coupon in the home zone.

14. The system according to claim 9, wherein the home advertising data includes contact data enabling the remote end user device to seamlessly connect to an advertiser in the remote zone associated with an advertiser in the home zone.

15. A computer storage medium containing a computer program for data communication in an internet protocol television (IPTV) system, the computer program comprising:
instructions to receive at a first end user device remote advertising data associated with a remote zone and home content data, wherein home content data is not available in the remote zone and instructions to merge the remote advertising data and the home video data at the first end user device.

16. A system for receiving advertising data in an internet protocol television (IPTV) system comprising:
a processor coupled to memory; and
a computer program in the memory comprising instructions to receive remote advertising data associated with a remote zone and home content data associated with a home zone at a remote end user device in a remote zone outside of the home zone wherein the home content data is not available in the remote zone.

17. A data structure in memory, comprising:
a home and remote client device IP address field for containing data indicating a client device IP address;
a home zone field for containing data indicating an advertising server for a home zone associated with the client device; and
a remote zone field for containing data indicating an advertising server for a remote zone associated with the client device.

18. The data structure of claim 17, further comprising:
a coupon field for storing data indicating coupons and location data indicating locations to which an equivalent remote coupon can be provided to the client device in the remote zone.

19. The data structure of claim 17 or 18, further comprising a zone server field for storing IPTV server identification data for each remote zone and each home zone indicating an IPTV system server identity associated with each remote zone and each home zone.
